# EUROPÄISCHE PATENTSCHRIFT

(11) **EP 2 030 588 B1**
(45) Veröffentlichungstag und Bekanntmachung des Hinweises auf die Patenterteilung: **15.08.2012**
(21) Anmeldenummer: 08163130.1
(22) Anmeldetag: 28.08.2008
(51) Int. Cl.: A61C 1/00, H02P 6/04, H02P 6/00

(54) **Schwingungssensor für einen Motor und für ein dentales Handstück sowie Verfahren zur Ermittlung und Auswertung der Schwingung**
Oscillation sensor for a motor and for a dental hand tool and method for calculating and evaluating the oscillation
Capteur de vibrations pour un moteur et pour une pièce à main dentaire et procédé de détermination et d'évaluation des vibrations

(30) Priorität: 29.08.2007 DE 102007041017
(43) Veröffentlichungstag der Anmeldung: 04.03.2009
(73) Patentinhaber: Sirona Dental Systems GmbH, 64625 Bensheim (DE)
(72) Erfinder: Rein, Matthias, 64653, Lorsch (DE)
(74) Vertreter: Sommer, Peter

(56) Entgegenhaltungen:
- EP-A- 0 549 910
- DE-U1- 20 309 622
- FR-A- 2 781 318
- FR-A- 2 881 341
- JP-A- 1 126 190
- US-A1- 2007 190 484

## Beschreibung

### Technisches Gebiet

Die Erfindung betrifft einen Antrieb für ein dentales Handstück.

Die Erfindung betrifft des Weiteren ein dentales Handstück mit einem Gehäuse und dem am Gehäuse angeordneten Antrieb.

Die Erfindung betrifft weiterhin ein Verfahren zum Erkennen eines als Körperschall auftretenden Schwingungsmusters eines Antriebs für ein Werkzeug eines dentalen Handstücks.

### Stand der Technik

Aus der DE 196 13 681 A1 sind ein Motor für ein dentales Handstück sowie ein dentales Handstück bekannt. Ein Sensor zur Erfassung eines Schwingungsmusters des Antriebs ist nicht beschrieben.

FR 288 134 1 beschreibt eine dentale Ultraschallvorrichtung die ellitel. Zur automatischen Erkennung einer eingesetzten Werkzeugspitze aufweist.

Die Aufgabe der Erfindung besteht darin, einen Antrieb bzw. ein dentales Handstück derart auszubilden und anzuordnen, dass eine Überprüfung der eingestellten Drehzahl und der Einsatzbedingungen gewährleistet ist.

Weiterhin besteht die Aufgabe der Erfindung darin, ein Verfahren zum Betrieb eines Antriebs bzw. eines dentalen Handstücks derart auszubilden, dass eine Überprüfung der Einsatzbedingungen gewährleistet ist.

### Darstellung der Erfindung

Die Erfindung ist in den Ansprüchen 1 ind 8 dargestellt.

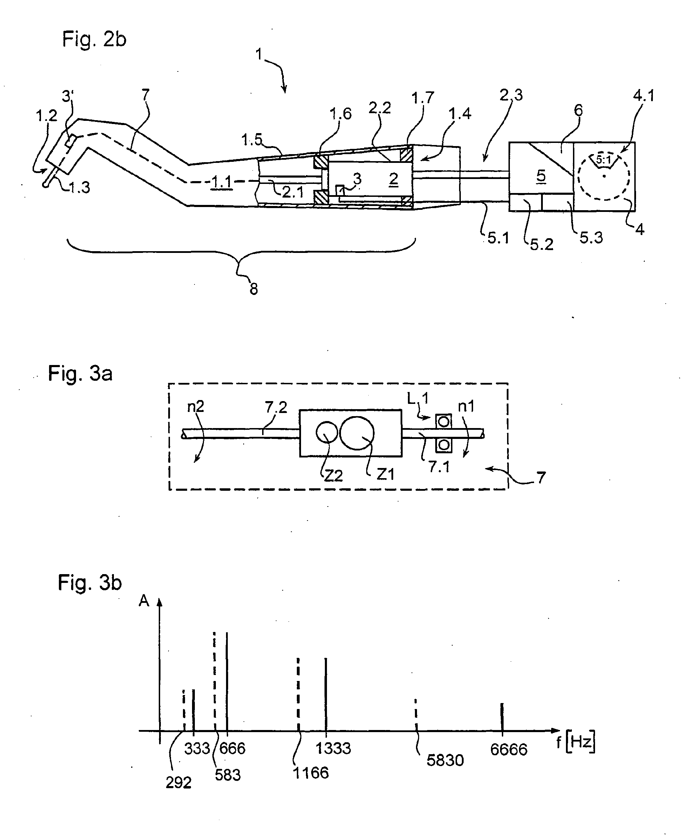

Gemäß der Erfindung weist der Antrieb einen Schwingungssensor zur Erfassung der antriebsseitig generierten Motor- und/oder Getriebe-Schwingungsmuster bzw. Resonanzmuster auf. Das Schwingungs- bzw. Resonanzmuster kann dabei aus einer oder mehreren erzwungenen Frequenzen oder Resonanzen bestehen. Bei dem Betrieb von Handstücken ist die Einstellung der verschiedenen Betriebsparameter, insbesondere der Drehzahl oder des Übersetzungsverhältnisses, nicht ohne Weiteres sicher gestellt. Insbesondere motorisch betriebene Bohrsysteme sind in verschiedenen Über- und Untersetzungen verbreitet. Es ist oftmals schwierig zu erkennen, mit welchem Überoder Untersetzungsverhältnis ein Handstück bzw. ein Antrieb ausgestattet ist. Die Paarung der Zahnräder der Über- oder Untersetzungsgetriebe erzeugen typische, teilweise sehr ausgeprägte Schwingungs- bzw. Resonanzmuster (siehe Fig. 3a, 3b). Durch die erfindungsgemäße Erfassung der Schwingungsmuster kann dieser Betriebsparameter festgestellt bzw. überprüft werden, d. h. ob insbesondere die Drehzahl und/oder das Übersetzungsverhältnis des Antriebs in dem eingestellten bzw. gewünschten und notwendigen Bereich liegt.

Hierzu ist eine Steuereinheit zur Steuerung des Antriebs vorgesehen, die Auswertemittel zur Auswertung des Ist-Schwingungsmusters sowie Vergleichsmittel zum Vergleich des ermittelten Ist-Schwingungsmusters mit mindestens einem Vergleichs-Schwingungsmuster aufweist. Für den Vergleich werden vorzugsweise Schwingungsmuster auf Basis einer oder mehrerer Frequenzen oder auch Resonanzen der jeweiligen Schwingungsmuster, also für bekannte Antriebs- bzw. Motor-Getriebe-Paarungen einerseits und für die zu prüfende Paarung andererseits, herangezogen. Bei den Frequenzen, die keine Resonanzen sind, handelt es sich um erzwungene Schwingungen wie bspw. die Motorschwingung oder die Getriebeschwingung, die durch die Anzahl der Zähne bestimmt wird. Die Frequenzen bzw. Resonanzen werden aus dem jeweiligen Schwingungsmuster mittels einer Fourier-Analyse ermittelt. Der Vergleich erfolgt zumindest nach Inbetriebnahme oder auch ständig zwecks Überwachung der Betriebsparameter.

Vorteilhafterweise kann ein Einstellmittel für eine einen Betriebsparameter bildende Soll-Drehzahl des Werkzeugs vorgesehen sein, wobei mittels der Steuereinheit eine Zuordnung zwischen dem eingestellten Betriebsparameter und einem Vergleichs-Schwingungsmuster generierbar ist. Somit kann der Vergleich unter Berücksichtigung des vom Anwender gewünschten Betriebsparameters, also der Drehzahl, erfolgen. Die Drehzahl des Motors, Getriebes und/oder Werkzeugs bringt zumindest eine typische Frequenz im Schwingungsmuster mit sich. Für eine Drehzahl von bspw. 40.000 1/min ist dies die Frequenz von etwa 666 Hz. Wenn der Anwender also eine Drehzahl von 40.000 1/min eingestellt hat, muss die Frequenz 666 Hz im Schwingungsmuster mit entsprechender Amplitude vorhanden sein. Ist dies nicht der Fall, stimmt die Drehzahl nicht. Andere typische Frequenzen können dabei ebenfalls alternativ oder ergänzend betrachtet werden. Für die Drehzahl des Werkzeugs bzw. Bohrers oder des Getriebes gilt entsprechendes. Hierzu wird auf das Ausführungsbeispiel Fig. 3a, 3b verwiesen. Insoweit ist eine Überprüfung von individuell eingestellten Betriebsparametern gewährleistet.

Zudem kann ein Informationsmittel zur Generierung eines Hinweises an den Anwender zumindest für den Fall vorgesehen sein, in dem eine Abweichung zwischen dem ermittelten Schwingungsmuster und dem dem eingestellten Betriebsparameter zu Grunde liegenden Vergleichs-Schwingungsmuster wie vorstehend ausgeführt vorliegt. Der Anwender kann die richtigen Betriebsparameter wählen oder die Behandlung unterbrechen, wenn die gewünschten Betriebsparameter bzw. die gewünschte Drehzahl nicht mit den tatsächlichen Betriebsparametern bzw. der tatsächlichen Drehzahl übereinstimmen.

Dabei kann der Schwingungssensor als Piezoelement oder als Beschleunigungsaufnehmer ausgebildet sein. Der Einsatz eines Piezoelements stellt die günstigere Bauteilvariante dar und gewährleistet eine ausreichende Genauigkeit für die Erfassung des Schwingungsmusters. Der Beschleunigungssensor weist auch ein Piezoelement auf, das auf einer seismischen Masse befestigt ist.

Weiterhin kann ein Antriebsgehäuse vorgesehen sein, mit dem der Schwingungssensor kraft- und/oder formschlüssig verbunden ist. Dadurch ist eine notwendige Schwingungsübertragung zwischen Sensor und Antrieb bzw. Antriebsgehäuse gewährleistet.

Ferner kann eine im Antriebsgehäuse über Antriebswellenlager gelagerte Antriebswelle vorgesehen sein, wobei der Schwingungssensor im Bereich des jeweiligen Antriebswellenlagers angeordnet und/oder kraft- und/oder formschlüssig mit diesem verbunden ist. Da die Wellenlager die zentralen Schwingungslager darstellen, ist mit der Platzierung des Sensors im Bereich derselben ein optimaler Abgriff der Schwingung gewährleistet.

Zudem kann der Schwingungssensor teilkreisförmig oder zylinderförmig ausgebildet und mit Bezug zur Antriebswelle in Umfangsrichtung am Antriebsgehäuse angeordnet sein. Der Schwingungsaktor kann zumindest teilweise in die Oberfläche des Antriebsgehäuses eingebettet sein. Der Schwingungssensor umgibt das Antriebsgehäuse somit mantelförmig, sodass eine bestmögliche Einkopplung der Schwingung gewährleistet ist.

Daneben kann der Schwingungssensor mehrteilig ausgebildet oder es können mehrere Schwingungssensoren vorgesehen sein. Je nach Anwendungsfall kann es vorteilhaft sein, die Schwingung des Antriebs nicht nur an einem, sondern an mehreren Punkten, insbesondere im Bereich seiner Lager, zu ermitteln.

Vorteilhafterweise kann das Antriebsgehäuse mit dem Gehäuse des dentalen Handstücks lösbar verbunden sein. Somit kann der Antrieb oder das Handstück gewechselt werden. Die Sensorik kann in das Handstück und/oder in den Antrieb bzw. das Antriebsgehäuse integriert sein, so dass die erfindungsgemäße Auswertung auch bei einem Wechsel gewährleistet ist.

Bei dem erfindungsgemäßen Verfahren zum Erkennen eines als Körperschall auftretenden Schwingungsmusters eines Antriebs für ein Werkzeug eines dentales Handstücks wird das Schwingungsmuster von einem Schwingungssensor aufgenommen und von einer Steuereinheit als Ist-Schwingungsmuster erfasst. Über die Steuereinheit wird das ermittelte Ist-Schwingungsmuster mit mindestens einem Vergleichs-Schwingungsmuster verglichen und der Anwender wird im Fall einer Abweichung zwischen dem Ist-Schwingungsmuster und dem Vergleichs-Schwingungsmuster mit einem Hinweis versorgt.

Vorteilhafterweise kann über ein Einstellmittel zumindest eine Drehzahl als Betriebsparameter des Werkzeugs eingestellt werden, wobei über die Steuereinheit eine Zuordnung zwischen dem eingestellten Soll-Betriebsparameter und einem Vergleichs-Schwingungsmuster generiert wird. Die Zuordnung umfasst den Vergleich des sich ergebenden Ist-Schwingungsmusters mit einem Vergleichs-Schwingungsmuster. Das Übersetzungsverhältnis ist bei Zahnradgetrieben konstant, so dass der Vergleich für jede vorgenommene Einstellung nur einmal erforderlich ist. Bei einem Einsatz von Reibgetrieben oder Turbinen wäre der Vergleich ständig durchzuführen, damit die gewünschte Drehzahl gewährleistet ist.

Ergänzend kann dem Vergleichs-Schwingungsmuster ein optimaler oder ein kritischer Zustand der Antriebswellenlager der Wellen, des Getriebes und/oder der Zahnräder zugeordnet sein, so dass im Fall des Erreichens eines kritischen Verschleißgrades der vorgenannten Antriebsglieder oder sonstiger Antriebskomponenten eine Abweichung (für optimale Vergleichs-Schwingungsmuster) oder eine Übereinstimmung (für kritische Vergleichs-Schwingungsmuster aufgrund erhöhten Verschleißes) zwischen dem Ist-Schwingungsmuster und dem Vergleichs-Schwingungsmuster erreicht wird und der Anwender mit einem Hinweis versorgt wird. Der Verschleiß bringt meist typische Schwingungsmuster mit sich, auf die hin das Ist-Schwingungsmuster untersucht werden kann. Der Verschleiß bringt unter anderem höhere Toleranzen und höheres Spiel mit sich, die entsprechend höhere Amplituden im Schwingungsmuster generieren. Diese höheren Amplituden sind durch den erfindungsgemäßen Vergleich erkennbar. Sobald ein erhöhter Verschleiß erkannt wird, erhält der Anwender ein Hinweis auf die Verschleißlage bzw. die erforderliche Wartung.

Dabei kann es von Vorteil sein, dass dem Vergleichs-Schwingungsmuster ein optimaler Drehzahlbereich zugeordnet wird, bei dem keine starken Resonanzen auftreten, so dass im Fall des Auftretens starker Resonanzen die Drehzahl derart geändert wird, dass die Höhe der Resonanzen ein gewünschtes Maß nicht überschreitet. Somit sind der Verschleißgrad und der Geräuschpegel optimiert. Starke Resonanzen sind durch die deutlich höhere Amplitude erkennbar. Deutlich höher ist eine Amplitude, wenn sie 20 % größer ist als die entsprechende Amplitude aus dem Vergleichsschwingungsmuster.

Hierbei kann ein Schwellenwert für die den Hinweis begründende Abweichung zwischen dem Ist-Schwingungsmuster und dem Vergleichs-Schwingungsmuster vorgesehen und/oder einstellbar sein. Die Abweichung bzw. Differenz zwischen dem Ist-Schwingungsmuster und dem Vergleichs-Schwingungsmuster kann als Abweichungsmuster bezeichnet werden. Wenn das Ist-Schwingungsmuster und das Vergleichs-Schwingungsmuster identisch sind, gibt es kein Abweichungsmuster. Aber im Regelfall sind das Ist-Schwingungsmuster und das Vergleichs-Schwingungsmuster unterschiedlich, so dass ein Abweichungsmuster besteht. Aufgrund des Schwellenwertes erfolgt nicht bei jeder noch so geringen Abweichung, also bei jedem beliebigen Abweichungsmuster, ein Hinweis. Ein Schwingungsmuster ist sehr komplex. Bei dem Vergleich kommt es in der Regel nur auf spezifische Frequenzen oder Resonanzen der zu vergleichenden Schwingungsmuster an, so dass Abweichungen zwischen den Schwingungsmustern, also ein Abweichungsmuster, durchaus möglich sind, ohne das Ausschlusskriterium zu erfüllen. Der eingestellte Schwellenwert ist für solche Abweichungsmuster zu groß bzw. zu breit. Neben dem ganzen Schwingungsmuster können auch nur einzelne Frequenzen bzw. Resonanzen verglichen werden.

Bei einem weiteren erfindungsgemäßen Verfahren zum Erkennen eines als Körperschall auftretenden Schwingungsmusters eines Antriebs für ein im Einsatz befindliches Werkzeug eines dentalen Handstücks wird das Schwingungsmuster von einem Schwingungssensor aufgenommen und von einer Steuereinheit als Ist-Schwingungsmuster erfasst. Der Steuereinheit wird mindestens ein Vergleichs-Schwingungsmuster bereitgestellt, dem mindestens ein Schwingungsverhalten des Antriebs im Einsatz am gesunden, am kariösen und/oder am weichen Zahn bzw. Krone zu Grunde liegt. Über die Steuereinheit wird dem ermittelten Ist-Schwingungsmuster mindestens ein Vergleichs-Schwingungsmuster zugeordnet, wobei der Anwender zumindest in dem Fall, in dem dem zugeordneten Vergleichs-Schwingungsmuster ein auf dem Einsatz am gesunden Zahn basierendes Schwingungsverhalten zu Grunde liegt, mit einem Hinweis versorgt wird. Der Vergleich ist ständig durchzuführen, damit ein rechtzeitiger Hinweis gewährleistet ist. Das Schwingungsmuster des Antriebs bzw. des Werkzeugs ändert sich mit dem zu bearbeitenden Zahnmaterial. Für jedes Zahnmaterial gibt es typische Schwingungsmuster, die diesem Vergleich zu Grunde liegen. Der Anwender wird also darauf hingewiesen, sobald er gesundes Zahnmaterial bearbeitet. Die gesunde Zahnsubstanz wird somit geschont. Bei einer Kronentrennung kann z. B. mehr Drehmoment bereit gestellt werden, ohne Gefahr zu laufen, dass aufgrund der damit einhergehenden hohen Abtragsleistung gesunde Zahnsubstanz unerwünschterweise abgetragen wird.

Hierzu kann zwecks Generierung des Hinweises ein Betriebsstopp, ein akustisches, taktiles und/oder ein visuelles Signal mittels der Steuereinheit initiiert werden. Ein Betriebsstopp ist insoweit unpraktikabel, als mitunter bewusst gesundes Zahnmaterial bearbeitet werden muss. Das akustische, taktile und/oder visuelle Signal kann vorzugsweise am Handstück sehr gut wahrgenommen werden. Verfahrensseitig ist es vorteilhaft, dass für den Vergleich und/oder die Zuordnung der verschiedenen Schwingungsmuster typische Frequenzen und/oder Resonanzen als Teil der Schwingungsmuster verwendet werden können. Das Schwingungsmuster ist sehr komplex. Jedes Schwingungsmuster weist in der Regel typische Frequenzen bzw. typische Resonanzen auf, deren Vergleich einfacher und schneller ist. Diese Frequenzen sind typischerweise Grund- und/oder Oberwellen, die proportional zur Antriebsfrequenz bzw. Antriebsdrehzahl auftreten. Die Frequenzen werden, falls erforderlich, mittels einer Fourier-Analyse oder einer FFT ermittelt.

### Kurze Beschreibung der Zeichnungen

In den Zeichnungen sind Ausführungsbeispiele der Erfindung dargestellt. Es zeigen:
- Fig. 1a: eine Prinzipskizze eines Motors in der Seitenansicht;
- Fig. 1b: eine Prinzipskizze eines Motors in der Ansicht von vorne mit Sensor;
- Fig. 1c: eine Prinzipskizze eines Motors in der Ansicht von vorne mit zylinderförmigem Sensor;
- Fig. 2a: ein dentales Handstück mit Sensor motorseitig;
- Fig. 2b: ein dentales Handstück mit Sensor bohrerseitig;
- Fig 3a: eine Prinzipskizze eines Getriebemoduls;
- Fig 3b: zwei idealisierte Ist- und Vergleichs-Muster.

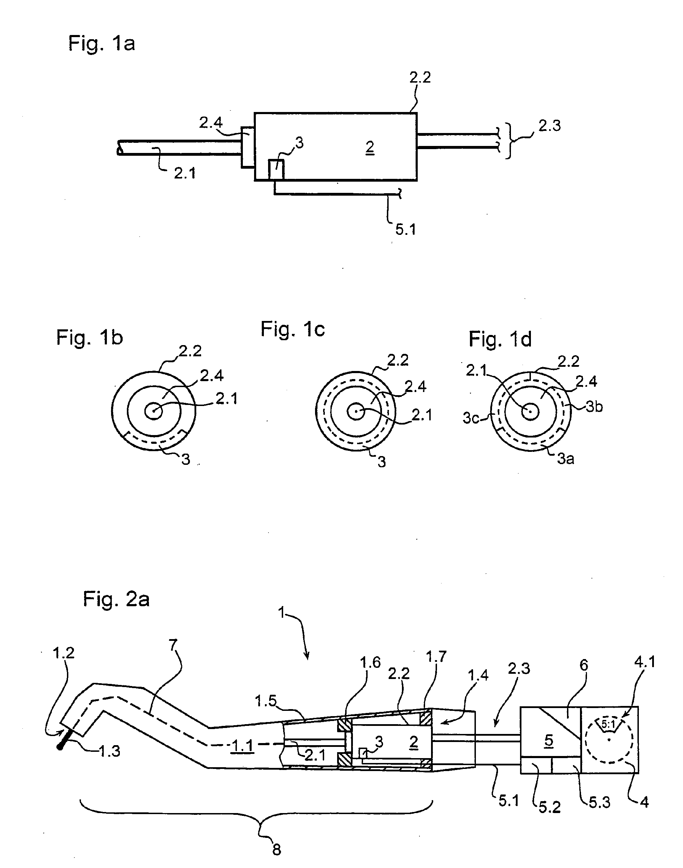

Ein in Figur 1a dargestellter, als Motor 2 ausgebildeter Antrieb 8 weist ein Motorgehäuse 2.2 auf, in welchem eine über Antriebswellenlager 2.4 gelagerte Antriebswelle 2.1 angeordnet ist.

Das Motorgehäuse 2.2 weist einen eingebetteten Schwingungssensor 3 auf, der die vom Motor 2 im Betrieb generierte Schwingung bzw. das Schwingungsmuster aufnimmt. Der Schwingungssensor 3 ist über das Motor- bzw.

Antriebsgehäuse 2.2 formschlüssig mit dem Antriebswellenlager 2.4 gekoppelt. Das Schwingungsmuster wird über eine Steuerleitung 5.1 von einer Steuereinheit 5 gemäß Figur 2a, 2b erfasst.

In der Ansicht von vorne gemäß Fig. 1b ist der teilkreisförmige Schwingungssensor 3 erkennbar.

Gemäß Ausführungsbeispiel Fig. 1c ist der Schwingungssensor 3 zylinderförmig ausgebildet, wobei der Schwingungssensor 3 gemäß Ausführungsbeispiel Fig. 1d drei Teile 3a, 3b, 3c aufweist bzw. drei Schwinungssensoren 3a - 3c vorgesehen sind.

Ein in Figur 2a dargestelltes dentales Handstück 1 weist ein Gehäuse 1.1 auf, in dem der aus dem Motor 2 und einem Getriebe 7 gebildete Antrieb 8 für ein an einer Stirnseite 1.2 gelagertes, als Bohrer ausgebildetes Werkzeug 1.3 gelagert bzw. angeordnet ist. Der Motor 2 ist im Bereich einer gegenüberliegenden Stirnseite 1.4 des Gehäuses 1.1 axial in das Gehäuse 1.1 eingeschoben und über Gehäuselager 1.6, 1.7 gelagert. Der Motor 2 wird über eine Spannungsversorgungsleitung 2.3 von der Steuereinheit 5 mit Energie und Steuersignalen versorgt. Über ein Einstellmittel 4 mit einer Anzeige 4.1 wird eine Drehzahlstufe bzw. ein Übersetzungsverhältnis, beispielsweise "5:1", eingestellt. Dies entspricht bei einer Antriebsdrehzahl n von 40.000 1/min einer BohrerDrehzahl b von 200.000 1/min. In einem nicht dargestellten Ausführungsbeispiel ist es vorgesehen, die gewünschte Drehzahl direkt über das Einstellmittel 4 zu wählen.

Die Antriebswelle 2.1 steht über das Getriebe 7 mit dem Bohrer 1.3 mechanisch im Eingriff.

Unmittelbar am Motorgehäuse 2.2, im Bereich des vorderen Gehäuselagers 1.6, ist der Schwingungssensor 3 angeordnet, der die vom Motor 2, Getriebe 7 und Bohrer 1.3 im Betrieb generierte Schwingung bzw. das Schwingungsmuster aufnimmt. Das Werkzeug bzw. der Bohrer 1.3 überträgt die im Betrieb am Zahn entstehenden Schwingungen bzw. das Schwingungsmuster über das Getriebe 7 und die Antriebswelle 2.1 auf den Motor 2. Letztlich wird eine Überlagerung aus den Schwingungsmustern von Motor 2, Getriebe 7 und dem im Eingriff am Zahn befindlichen Werkzeug 1.3 erfasst.

Der Schwingungssensor 3 ist zwecks Einkopplung der Schwingungen vorzugsweise am Motorgehäuse 2.2 und/oder im Bereich der Gehäuselager 1.6, 1.7 aufgeklebt und/oder aufgespannt. Zur Einspannung können auch eine Gehäusewand 1.5 bzw. die Gehäuselager 1.6, 1.7 des Handstücks 1 dienen. Dieses Schwingungsmuster wird über die Steuerleitung 5.1 von der Steuereinheit 5 erfasst.

Das Schwingungsmuster wird von dem Schwingungssensor 3 aufgenommen und von der Steuereinheit 5 bzw. einem Auswertemittel 5.2 als Ist-Schwingungsmuster erfasst. Über die Steuereinheit 5 bzw. ein Vergleichsmittel 5.3 wird das ermittelte Ist-Schwingungsmuster mit mindestens einem Vergleichs-Schwingungsmuster verglichen. Bei dem Vergleichs-Schwingungsmuster handelt es sich um bekannte Schwingungsmuster von Motoren 2, Getrieben 7 und/oder Bohrern 1.3 im Betrieb, wobei die tatsächlichen Betriebsparameter wie beispielsweise die Drehzahl, das Übersetzungsverhältnis und/oder der Verschleißzustand bekannt sind. Im Fall einer Abweichung zwischen dem Ist-Schwingungsmuster und dem Vergleichs-Schwingungsmuster, dem ein eingestellter Betriebsparameter zu Grunde liegt, erhält der Anwender einen Hinweis. Somit ist er darüber informiert, dass z. B. die Bohrerdrehzahl nicht mit der Antriebs- bzw. Motordrehzahl und dem eingestellten Übersetzungsverhältnis bzw. der eingestellten Drehzahl korreliert. Die Größe der den Hinweis begründenden Abweichung der Antriebsdrehzahl kann eingestellt werden, so dass geringe bzw. unrelevante Abweichungen unberücksichtigt bleiben.

Bei dem Vergleich der Schwingungsmuster werden vorzugsweise eine oder mehrere spezifische bzw. typische Frequenzen oder/und Resonanzen des jeweiligen Schwingungsmusters miteinander verglichen. Die Resonanzen werden über die Auswertemittel 5.2, vorzugsweise mittels einer Fourier-Analyse, ermittelt.

Gemäß Ausführungsbeispiel wird über das Einstellmittel 4 zumindest eine Drehzahlstufe des Werkzeugs 1.3 wie bspw. 2:1 eingestellt, wobei über die Steuereinheit 5 eine Zuordnung zwischen der eingestellten Drehzahlstufe und einem Vergleichs-Schwingungsmuster generiert wird. Bei einer vorgegebenen bzw. festen Motordrehzahl von 40.000 1/min muss bei der vorgegebenen Drehzahlstufe von 2:1 eine Bohrerdrehzahl von 80.000 1/min generiert werden. Das Vergleichs-Schwingungsmuster basiert also auf einer Bohrerdrehzahl von 80.000 1/min unter Einsatz eines Getriebes 7 mit einer Drehzahlstufe von 2:1. Mit der Zuordnung wird ausgehend von dem eingestellten Betriebsparameter, also der Drehzahlstufe, das zugehörige bzw. anzuwendende Vergleichs-Schwingungsmuster ermittelt. Anschließend werden das Ist-Schwingungsmuster und das Vergleichs-Schwingungsmuster die vorhandenen Frequenzen bzw. Resonanzen betreffend wie vorstehend beschrieben verglichen und gegebenenfalls eine Abweichung zwischen beiden ermittelt.

Im Ausführungsbeispiel gemäß Figur 2b ist ergänzend bzw. alternativ ein Schwingungssensor 3' im Bereich des Bohrers 1.3 vorgesehen, der das dort generierte Schwingungsmuster direkt abgreift. Das Schwingungsmuster wird von dem Schwingungssensor 3' aufgenommen und von der Steuereinheit 5 als Ist-Schwingungsmuster erfasst. Der Steuereinheit 5 ist mindestens ein Vergleichs-Schwingungsmuster bereitgestellt, dem mindestens ein Schwingungsverhalten des Bohrers 1.3 und/oder des Getriebes 7 im Einsatz am gesunden, am kariösen und/oder am weichen Zahn zu Grunde liegt. Das bzw. die verschiedenen Vergleichs-Schwingungsmuster sind unter Einsatz von bekannten, den Bohrer 1.3 und das Getriebe 7 aufweisenden Winkelstücken unter bekannten Einsatzbedingungen wie vor allem der Zustand der bearbeiteten Zahnsubstanz ermittelt. Über die Steuereinheit 5 wird dem ermittelten Ist-Schwingungsmuster mindestens ein Vergleichs-Schwingungsmuster zugeordnet. Der Anwender wird in dem Fall, in dem dem zugeordneten Vergleichs-Schwingungsmuster ein auf dem Einsatz am gesunden Zahn basierendes Schwingungsverhalten zu Grunde liegt, mit einem Hinweis versorgt. Somit ist der Anwender darüber informiert, dass er gerade gesundes Zahnmaterial bearbeitet.

Fig. 3a zeigt eine Prinzipskizze eines Getriebemoduls 7 mit einer Antriebswelle 7.1, einer Abtriebswelle 7.2 sowie zwei im Eingriff befindlichen Zahnrädern Z1, Z2. Die Antriebswelle 7.1 ist über ein exemplarisch dargestelltes Lager L1 bzw. eine Lageranordnung gelagert. Das Getriebemodul 7 ist über die Antriebswelle 7.1 an einen nicht dargestellten Motor gekoppelt. Es können auch mehrere Getriebemodule 7 in Reihe gekoppelt sein. Die Antriebswelle 7.1 weist die Antriebsdrehzahl n1 des Motors auf. In Abhängigkeit des Übersetzungsverhältnisses Z1:Z2 von beispielsweise 10 zu 5 Zähnen weist die Abtriebswelle 7.2 die Abtriebsdrehzahl n2, die der doppelten Antriebsdrehzahl n1 entspricht, auf. Das Lager L1 weist eine Rotationsfrequenz auf, die der halben Antriebsdrehzahl n1 entspricht. Generell haben Lager typische Resonanzfrequenzen, die je nach Lagertyp verschieden sind. Die Annahme der halben Drehzahl ist eine vereinfachte Anschauungsweise.

In der nachstehenden Tabelle sind die sich aus vorstehend beschriebenem Aufbau entstehenden Schwingungsfrequenzen f der jeweiligen Bauteile, also die Antriebswelle 7.1 bzw. der Motor 2, das Lager L1, die Abtriebswelle 7.2 bzw. das Werkzeug 1.3 und die Zahnräder Z1, Z2, aufgeführt. Für die beiden Zahnräder Z1, Z2 ergeben sich die Schwingungsfrequenzen f zum einen aufgrund des Übersetzungsverhältnisses und zum anderen aufgrund der Anzahl der Zähne. Die Schwingungsfrequenzen f stehen in einem festen Verhältnis zur Antriebsdrehzahl.

| Bauteil | Drehzahl n1 [1/min] | Frequenz f [Hz] | Drehzahl ni [1/min] | Frequenz f [Hz] |
|---|---|---|---|---|
| Antrieb 7.1 | n1=40.000 | 666 | ni=35.000 | 583 |
| Lager L1 | n1*0,5 | 333 | ni*0,5 | 292 |
| Zahnrad Z1 | n1*10 Zähne | 6666 | ni*10 Zähne | 5830 |
| zahnrad Z2 | n2*5 Zähne | 6666 | n(i+1)*5 Zähne | 5830 |
| Abtrieb 7.2 | n2=2*n1=80.000 | 1333 | n(i+1)=2*ni=70.000 | 1166 |

In Fig. 3b sind die vorstehend genannten Schwingungsfrequenzen f als Ergebnis einer Fourier-Analyse über der Amplitude A dargestellt. Es ergibt sich ein Vergleichsschwingungsmuster für die Drehzahl n1=40.000 1/min und ein Ist-Schwingungsmuster für die Drehzahl ni=35.000 1/min (gestrichelt). Die so gebildeten Schwingungsmuster weichen deutlich voneinander ab, so dass erfindungsgemäß durch Vergleich der Schwingungsmuster ermittelt werden kann, dass die gewünschte Motordrehzahl von 40.000 1/min in dem gestrichelt dargestellten Fall mangels Übereinstimmung der Frequenz/Amplituden-Paarung nicht vorliegt.

Das jeweilige Schwingungsmuster stellt sozusagen einen Fingerabdruck des eingesetzten Getriebemoduls 7 in Kombination mit dem Motor 2 bei der jeweiligen Motordrehzahl dar. Neben dem hier dargestellten Einfluss der unterschiedlichen Motordrehzahl führen weitere Betriebsparameter wie beispielsweise die Anzahl der Zähne der Zahnräder Z1, Z2 oder auch die Art und der Zustand des Lagers L1 zu entsprechenden Abweichungen im Schwingungsmuster, die in einem Vergleich erfindungsgemäß analysiert werden können.

Bei den vorliegenden Frequenzen handelt es sich um Zwangsschwingungen von Motor 2 und Getriebe 7. Daneben können Resonanzen der verschiedenen Bauteile oder Gehäuseteile ebenso zumindest Teil des Schwingungsmusters sein und zwecks Vergleichs herangezogen werden.

### Bezugszeichen

- 1: dentales Handstück
- 1.1: Gehäuse
- 1.2: Stirnseite
- 1.3: Werkzeug, Bohrer
- 1.4: Stirnseite
- 1.5: Gehäusewand
- 1.6: Gehäuselager
- 1.7: Gehäuselager
- 2: Antrieb, Motor
- 2.1: Antriebswelle
- 2.2: Antriebsgehäuse, Motorgehäuse
- 2.3: Spannungsversorgungsleitung für Motor
- 2.4: Antriebswellenlager
- 3: Schwingungssensor
- 3': Schwingungssensor
- 3a: Teil, Schwingungssensor
- 3b: Teil, Schwingungssensor
- 3c: Teil, Schwingungssensor
- 4: Einstellmittel
- 4.1: Anzeige
- 5: Steuereinheit
- 5.1: Steuerleitung
- 5.2: Auswertemittel
- 5.3: Vergleichsmittel
- 6: Informationsmittel
- 7: Getriebe, Getriebemodul
- 7.1: Antriebswelle
- 7.2: Abtriebswelle
- 8: Antrieb
- A: Amplitude
- f: Schwingungsfrequenz
- L1: Lager
- n1: Antriebsdrehzahl
- n2: Antriebsdrehzahl
- Z1: Zahnrad
- Z2: Zahnrad

## Patentansprüche

1. Dentales Handstück (1) mit einem Gehäuse (1.1) und mit einem im Gehäuse (1.1) angeordneten Antrieb (2), wobei der Antrieb einen Schwingungssensor (3) zur Erfassung eines antriebsseitig generierbaren, als Körperschall auftretenden Ist-Schwingungsmusters aufweist, wobei der Antrieb (2) ein Antriebsgehäuse (2.2) und ein Getriebe (7) aufweist , wobei eine im Antriebsgehäuse (2.2) über Antriebswellenlager (2.4) gelagerte Antriebswelle (2.1) vorgesehen ist, wobei der Schwingungssensor (3) im Bereich des jeweiligen Antriebswellenlagers (2.4) angeordnet und/oder kraft-und/oder formschlüssig mit diesem verbunden ist und wobei eine Steuereinheit (5) zur Steuerung des Antriebs (2) vorgesehen ist, die Auswertemittel (5.2) zur Auswertung des Ist-Schwingungsmusters sowie Vergleichsmittel (5.3) zum Vergleich des ermittelten Ist-Schwingungsmusters mit mindestens einem Vergleichs-Schwingungsmuster aufweist, wobei aus dem Schwingungsmuster über die Auswertemittel eine oder mehrere spezifische oder typische Frequenzen und/oder Resonanzen ermittelbar sind.

2. Dentales Handstück (1) nach Anspruch 1, **dadurch gekennzeichnet, dass** ein Einstellmittel (4) für eine einen Betriebsparameter bildende Drehzahl des Werkzeugs (1.3) vorgesehen ist, wobei mittels der Steuereinheit (5) eine Zuordnung zwischen dem eingestellten Betriebsparameter und einem Vergleichs-Schwingungsmuster generierbar ist.

3. Dentales Handstück nach Anspruch 2, **dadurch gekennzeichnet, dass** ein Informationsmittel (6) zur Generierung eines Hinweises an den Anwender zumindest für den Fall vorgesehen ist, in dem eine Abweichung zwischen dem ermittelten Schwingungsmuster und dem dem eingestellten Betriebsparameter zu Grunde liegenden Vergleichs-Schwingungsmuster vorliegt.

4. Dentales Handstück nach einem der Ansprüche 1 bis 3, **dadurch gekennzeichnet, dass** der Schwingungssensor (3) als Piezoelement oder als Beschleunigungsaufnehmer ausgebildet ist.

5. Dentales Handstück nach einem der Ansprüche 1 bis 4, **dadurch gekennzeichnet, dass** der Schwingungssensor (3) teilkreisförmig oder zylinderförmig ausgebildet ist und mit Bezug zur Antriebswelle (2.1) in Umfangsrichtung am Antriebsgehäuse (2.2) angeordnet ist.

6. Dentales Handstück nach einem der Ansprüche 1 bis 5, **dadurch gekennzeichnet, dass** der Schwingungssensor (3) ein- oder mehrteilig ausgebildet ist oder mehrere Schwingungssensoren (3) vorgesehen sind.

7. Dentales Handstück nach einem der Ansprüche 1 bis 6, **dadurch gekennzeichnet, dass** das Antriebsgehäuse (2.2) mit dem Gehäuse (1.1) des dentalen Handstücks (1) lösbar verbunden ist.

8. Verfahren zum Erkennen eines als Körperschall auftretenden Schwingungsmusters eines Antriebs (2) für ein Werkzeug (1.3) eines dentalen Handstücks (1), **dadurch gekennzeichnet, dass**
a) das Schwingungsmuster von einem Schwingungssensor (3) aufgenommen und von einer Steuereinheit (5) als Ist-Schwingungsmuster erfasst wird,
b) über die Steuereinheit (5) das ermittelte Ist-Schwingungsmuster mit mindestens einem Vergleichs-Schwingungsmuster verglichen wird, wobei mindestens eine Frequenz sowie eine dazugehörige Amplitude des Ist-Schwingungsmusters mit entsprechenden Vergleichswerten des Vergleichsschwingungsmusters verglichen werden und dass
c) der Anwender im Fall einer Abweichung zwischen dem Ist-Schwingungsmuster und dem Vergleichs-Schwingungsmuster mit einem Hinweis versorgt wird.

9. Verfahren nach Anspruch 8, **dadurch gekennzeichnet, dass** über das Einstellmittel (4) zumindest eine Drehzahl als Betriebsparameter des Werkzeugs (1.3) eingestellt wird, wobei über die Steuereinheit (5) eine Zuordnung zwischen dem eingestellten Betriebsparameter und einem Vergleichs-Schwingungsmuster generiert wird.

10. Verfahren nach Anspruch 8, **dadurch gekennzeichnet, dass** dem Vergleichs-Schwingungsmuster ein optimaler oder ein kritischer Zustand der Antriebswellenlager (2.4) der Wellen (7.1, 7.2), eines Getriebes (7) und/oder der Zahnräder (Z1, Z2) zugeordnet wird, so dass im Fall des Erreichens eines kritischen Verschleißgrades eine Abweichung oder eine Übereinstimmung zwischen dem Ist-Schwingungsmuster und dem Vergleichs-Schwingungsmuster erreicht wird und der Anwender mit einem Hinweis versorgt wird.

11. Verfahren nach Anspruch 8, **dadurch gekennzeichnet, dass** dem Vergleichs-Schwingungsmuster ein optimaler Drehzahlbereich zugeordnet wird, bei welchem keine starken Resonanzen auftreten, so dass im Fall des Auftretens starker Resonanzen die Drehzahl derart geändert wird, dass die Höhe der Resonanzen ein gewünschtes Maß nicht überschreitet.

12. Verfahren nach einem der Ansprüche 8 bis 11, **dadurch gekennzeichnet, dass** ein Schwellenwert für die den Hinweis begründende Abweichung zwischen dem Ist-Schwingungsmusters und dem Vergleichs-Schwingungsmuster vorgesehen und/oder einstellbar ist.

13. Verfahren nach einem der Ansprüche 8 bis 12, **dadurch gekennzeichnet, dass**
a) der Steuereinheit (5) mindestens ein Vergleichs-Schwingungsmuster bereit gestellt wird, dem mindestens ein Schwingungsverhalten des Antriebs (2) im Einsatz am gesunden, am kariösen und/oder am weichen Zahn zu Grunde liegt,
b) über die Steuereinheit (5) dem ermittelten Ist-Schwingungsmuster mindestens ein Vergleichs-Schwingungsmuster zugeordnet wird und
c) der Anwender zumindest in dem Fall, in dem dem zugeordneten Vergleichs-Schwingungsmuster ein auf dem Einsatz am gesunden Zahn basierendes Schwingungsverhalten zu Grunde liegt, mit einem Hinweis versorgt wird.

14. Verfahren nach einem der Ansprüche 10 bis 13, **dadurch gekennzeichnet, dass** für den Vergleich und/oder die Zuordnung der verschiedenen Schwingungsmuster typische Frequenzen und/oder Resonanzen als Teil der Schwingungsmuster verwendet werden.

## Claims

1. A dental handpiece (1) comprising a housing (1.1) and comprising a drive (2) disposed in said housing (1.1), wherein said drive comprises a vibration sensor (3) for acquisition of an actual vibration pattern that may be generated at the drive end in the form of structure-borne noise, wherein said drive (2) comprises a drive housing (2.2) and a transmission (7), wherein a driving shaft (2.1) is provided, which is mounted in said drive housing (2.2) by means of driving shaft bearings (2.4), wherein said vibration sensor (3) is disposed in the region of the respective driving shaft bearing (2.4) and/or is connected frictionally and/or positively thereto and wherein there is provided, for the control of said drive (2), a control unit (5), which comprises evaluating means (5.2) for evaluation of said actual vibration pattern and a reference unit (5.3) for comparing said determined actual vibration pattern with at least one reference vibration pattern, wherein one or more specific or typical frequencies and/or resonances are ascertainable from said vibration pattern by means of said evaluating means.

2. The dental handpiece (1) as defined in claim 1, **characterized in that** a setting means (4) is provided for varying the speed of rotation of said tool (1.3) constituting an operating parameter, wherein an association can be established between said adjusted operating parameter and a reference vibration pattern by means of said control unit (5).

3. The dental handpiece as defined in claim 2, **characterized in that** an information means (6) for generation of a prompt to the user is provided at least for the situation in which there is a deviation between said determined vibration pattern and said reference vibration pattern referring to said adjusted operating parameter.

4. The dental handpiece as defined in any one of claims 1 to 3, **characterized in that** said vibration sensor (3) is in the form of a piezoelectric element or an accelerometer.

5. The dental handpiece as defined in any one of claims 1 to 4, **characterized in that** said vibration sensor (3) is partially circular, or cylindrical, in shape and is disposed on said drive housing (2.2) in the peripheral direction in relation to said driving shaft (2.1).

6. The dental handpiece as defined in any one of claims 1 to 5, **characterized in that** said vibration sensor (3) is composed of one or more pieces, or a plurality of vibration sensors (3) is provided.

7. The dental handpiece as defined in any one of claims 1 to 6, **characterized in that** said drive housing (2.2) is releasably attached to said housing (1.1) of said dental handpiece (1).

8. A method for the recognition of a vibration pattern of a drive (2) for a tool (1.3) of a dental handpiece (1) occurring in the form of structure-borne noise, **characterized in that**
a) the vibration pattern is ascertained by a vibration sensor (3) and registered by a control unit (5) as actual vibration pattern,
b) said determined actual vibration pattern is compared with at least one reference vibration pattern by means of said control unit (5), in which at least one frequency and an associated amplitude of said actual vibration pattern are compared with corresponding reference values of said reference vibration pattern, and
c) when there is a deviation between said actual vibration pattern and said reference vibration pattern, the user is supplied with a prompt to that effect.

9. The method as defined in claim 8, **characterized in that** at least one speed of rotation forming an operating parameter of said tool (1.3) is adjusted by said setting means (4), and wherein an association between said adjusted operating parameter and a reference vibration pattern is established by said control unit (5).

10. The method as defined in claim 8, **characterized in that** said reference vibration pattern relates to an optimal, or critical, state relating to said driving shaft bearings (2.4) of said shafts (7.1, 7.2), to a transmission (7), and/or to the gear wheels (Z1, Z2), so that when a critical amount of wear has been reached, there is deviation, or conformity, between said actual vibration pattern and said reference vibration pattern and the user is prompted to that effect.

11. The method as defined in claim 8, **characterized in that** said reference vibration pattern relates to an optimal speed range, in which no severe resonances occur, so that when severe resonances do occur, the speed of rotation is modified such that the amplitude of said resonances does not exceed a desired value.

12. The method as defined in any one of claims 8 to 11, **characterized in that** a threshold value for the prompt arising from the deviation between said actual vibration pattern and said reference vibration pattern is provided and/or is adjustable.

13. The method as defined in any one of claims 8 to 12, **characterized in that**
a) said control unit (5) is provided with at least one reference vibration pattern, which relates to at least one type of vibration behavior of said drive (2) when used on a healthy, a carious, and/or a soft tooth,
b) at least one reference vibration pattern is assigned to said ascertained actual vibration pattern by said control unit (5), and
c) at least when the vibration behavior based on use on a healthy tooth is allocated to said reference vibration pattern, the user is prompted to that effect.

14. The method as defined in any one of claims 10 to 13, **characterized in that**, for the purpose of comparing and/or allocating the various vibration patterns, typical frequencies and/or resonances are implemented as part of the vibration pattern.).

## Revendications

1. Pièce à main dentaire (1), comprenant un boîtier (1.1) et un dispositif d'entraînement (2) disposé dans le boîtier (1.1), dans laquelle le dispositif d'entraînement présente un capteur d'oscillation (3) pour détecter un motif d'oscillation réel pouvant être généré côté entraînement et se présentant sous forme de bruit de structure, dans laquelle le dispositif d'entraînement (2) présente un boîtier d'entraînement (2.2) et un engrenage (7), dans laquelle un arbre d'entraînement (2.1) logé dans le boîtier d'entraînement (2.2) sur des paliers d'arbre d'entraînement (2.4) est prévu, dans laquelle le capteur d'oscillation (3) est disposé au niveau du palier d'arbre d'entraînement (2.4) respectif ou relié à celui-ci par adhérence et/ou par complémentarité de forme, et dans laquelle une unité de commande (5) pour commander le dispositif d'entraînement (2) est prévue qui présente des moyens d'évaluation (5.2) pour évaluer le motif d'oscillation réel ainsi que des moyens de comparaison (5.3) pour comparer le motif d'oscillation réel déterminé à au moins un motif d'oscillation comparatif, dans laquelle les moyens d'évaluation permettent de déterminer à partir du motif d'oscillation une ou plusieurs fréquences et/ou résonances spécifiques ou typiques.

2. Pièce à main dentaire (1) selon la revendication 1, **caractérisée en ce qu'**un moyen de réglage (4) est prévu pour une vitesse de rotation de l'outil (1.3) constituant un paramètre opérationnel, dans laquelle l'unité de commande (5) permet de générer une affectation entre le paramètre opérationnel réglé et un motif d'oscillation comparatif.

3. Pièce à main dentaire selon la revendication 2, **caractérisée en ce qu'**un moyen d'information (6) est prévu, permettant de générer un avertissement pour l'utilisateur au moins au cas où il y aurait un écart entre le motif d'oscillation déterminé et le motif d'oscillation comparatif à la base du paramètre opérationnel réglé.

4. Pièce à main dentaire selon l'une quelconque des revendications 1 à 3, **caractérisée en ce que** le capteur d'oscillation (3) est réalisé sous la forme d'un élément piézoélectrique ou d'un détecteur d'accélération.

5. Pièce à main dentaire selon l'une quelconque des revendications 1 à 4, **caractérisée en ce que** le capteur d'oscillation (3) est réalisé en forme de cercle partiel ou en forme de cylindre et disposé sur le boîtier d'entraînement (2.2) dans la direction périphérique par rapport à l'arbre d'entraînement (2.1).

6. Pièce à main dentaire selon l'une quelconque des revendications 1 à 5, **caractérisée en ce que** le capteur d'oscillation (3) est réalisé en une ou plusieurs pièces ou **en ce que** plusieurs capteurs d'oscillation (3) sont prévus.

7. Pièce à main dentaire selon l'une quelconque des revendications 1 à 6, **caractérisée en ce que** le boîtier d'entraînement (2.2) est relié de manière amovible au boîtier (1.1) de la pièce à main dentaire (1).

8. Procédé de détection d'un motif d'oscillation se présentant sous la forme d'un bruit de structure d'un dispositif d'entraînement (2) pour un outil (1.3) d'une pièce à main dentaire (1), **caractérisé en ce que**
a) le motif d'oscillation est enregistré par un capteur d'oscillation (3) et détecté par une unité de commande (5) sous la forme d'un motif d'oscillation réel,
b) l'unité de commande (5) compare le motif d'oscillation déterminé à au moins un motif d'oscillation comparatif, dans lequel au moins une fréquence ainsi qu'une amplitude associée du motif d'oscillation réel sont comparées à des valeurs comparatives correspondantes du motif d'oscillation comparatif, et **en ce que**
c) au cas où il y aurait un écart entre le motif d'oscillation réel et le motif d'oscillation comparatif, l'utilisateur est averti.

9. Procédé selon la revendication 8, **caractérisé en ce que** le moyen de réglage (4) permet de régler au moins une vitesse de rotation en tant que paramètre opérationnel de l'outil (1.3), dans lequel l'unité de commande (5) génère une affectation entre le paramètre opérationnel réglé et un motif d'oscillation comparatif.

10. Procédé selon la revendication 8, **caractérisé en ce que** l'on affecte au motif d'oscillation comparatif un état optimal ou un état critique des paliers d'arbre d'entraînement (2.4) des arbres (7.1, 7.2), d'un engrenage (7) et/ou des roues dentées (Z1, Z2) de sorte que si un degré d'usure critique est atteint, un écart ou une coïncidence entre le motif d'oscillation réel et le motif d'oscillation comparatif est obtenu(e) et l'utilisateur en est averti.

11. Procédé selon la revendication 8, **caractérisé en ce que** l'on affecte au motif d'oscillation comparatif une plage de vitesses de rotation optimale, dans laquelle aucune résonance forte n'apparaît, de sorte que si des résonances fortes apparaissent, la vitesse de rotation est modifiée de telle sorte que la hauteur des résonances ne dépasse pas un certain degré souhaité.

12. Procédé selon l'une quelconque des revendications 8 à 11, **caractérisé en ce qu'**un seuil est prévu et/ou réglable pour l'écart entre le motif d'oscillation réel et le motif d'oscillation comparatif qui justifie l'avertissement.

13. Procédé selon l'une quelconque des revendications 8 à 12, **caractérisé en ce que**
a) l'on fournit à l'unité de commande (5) au moins un motif d'oscillation comparatif qui est basé sur au moins un comportement oscillatoire du dispositif d'entraînement (2) lors de l'utilisation sur une dent saine, cariée et/ou hypocalcifiée,
b) l'unité de commande (5) affecte au motif d'oscillation réel au moins un motif d'oscillation comparatif, et
c) l'utilisateur est averti au moins au cas où le motif d'oscillation comparatif affecté serait basé sur un comportement oscillatoire basé sur une utilisation sur une dent saine.

14. Procédé selon l'une quelconque des revendications 10 à 13, **caractérisé en ce que** pour la comparaison et/ou l'affectation des différents motifs d'oscillation, des fréquences et/ou résonances typiques sont utilisées comme une partie des motifs d'oscillation.
